# EUROPÄISCHE PATENTSCHRIFT

(11) **EP 0 526 689 B1**
(45) Veröffentlichungstag und Bekanntmachung des Hinweises auf die Patenterteilung: **08.05.1996**
(21) Anmeldenummer: 92103923.6
(22) Anmeldetag: 07.03.1992
(51) Int. Cl.: C21D 9/02

(54) **Verfahren zum Herstellen einer Schraubendruckfeder**
Process for the making of a helical compression spring
Procédé de fabrication de ressort de compression hélicoidal

(30) Priorität: 23.07.1991 DE 4124326
(43) Veröffentlichungstag der Anmeldung: 10.02.1993
(73) Patentinhaber: Krupp Brüninghaus GmbH, D-58791 Werdohl (DE)
(72) Erfinder: Beihammer, Horst, Dipl.-Ing., W-5980 Werdohl (DE); Broscheit, Klaus, W-5980 Werdohl (DE); Kühnert, Berthold, W-5980 Werdohl (DE); Wienand, Josef, Dipl.-Ing., W-5980 Werdohl (DE)
(74) Vertreter: Cohausz & Florack Patentanwälte

(56) Entgegenhaltungen:
- EP-A- 0 263 300
- DE-A- 2 752 948
- FR-A- 2 335 605
- US-A- 1 595 803

## Beschreibung

Die Erfindung betrifft ein verfahren zum Herstellen einer Schraubendruckfeder aus einem Federrohling, der durch axiales Zusammenpressen der Federwindungen vorgesetzt und danach wieder axial entspannt wird, wobei durch das Vorsetzen der axial etwas längere Federrohling zur demgegenüber etwas kürzeren fertigen Schraubendruckfeder wird.

Dieses Verfahren der Herstellung von Schraubendruckfedern bzw. dieser das vorsetzen betreffende Verfahrensschritt ist allgemein bekannte, regelmäßig geübte Praxis und ermöglicht eine Großserienproduktion gleichbleibender Qualität und weitgehender Konstanz in den Abmessungen der Schraubendruckfedern in Bezug auf die Bedingungen des praktischen Einsatzes der Schraubendruckfedern.

Beim Setzen einer zylindrischen kalt- oder warmgewickelten Schraubendruckfeder aus Federstahl wird diese entweder bis zum Block, in dem die einzelnen Windungen aneinander anliegen, oder bis nahe an die Blockbildung heran zusammengepreßt, wobei bis zu einer Blockspannung von etwa 1050 N/mm das Warmsetzen angewandt werden kann, während darüber kalt gesetzt wird. Da aber eine Schraubenfeder aus endlichen Stahlstäben oder Stahldrahtabschnitten gewickelt und kein rotationssymmetrischer Körper ist, ergibt sich ausgehend von der Lage der Federdrahtenden eine außermittige Krafteinwirkung beim Zusammenpressen, wobei häufig die einzelnen Windungen des Federblockes sich nicht auf ihrem gesamten Windungsbereich berühren. Dies führt dazu, daß die Mittellinie einer vorgesetzten zylindrischen Schraubendruckfeder regelmäßig von einer exakten Geraden abweicht und dadurch bedingt ein bestimmtes Ausbeulverhalten zeigt.

In der Kraftfahrzeugindustrie finden zylindrische Schraubendruckfedern vielfach, beispielsweise in Radaufhängungen von Kraftfahrzeugen häufig in verbindung mit einem Stoßdämpfer Verwendung. Die nachteiligen Wirkungen von durch dynamische Wechselbeanspruchungen, denen eine Radaufhängung ausgesetzt ist, auftretenden Kräften, insb. Querkräften können dadurch vermindert werden, daß Schraubendruckfedern eingesetzt werden, die im unbelasteten Zustand von der Zylinderform abweichen und, wie dies in der DE-PS 3743450 vorgeschlagen wird, eine etwa S-förmige Federmittellinie haben können.

Während durch Kaltwinden von Federn diese technischen Forderungen einer vorgegebenen Krümmung recht gut umgesetzt werden können, bereitet es gewisse Schwierigkeiten, solch krumme Federn warm zu produzieren. Dabei liegt ein Kernproblem darin, die Feder nicht nur mit einer gewünschten Krümmung zu versehen, sondern die Krümmung auch in die richtige Richtung in Bezug auf die Winkellage der Federnden zu legen und damit die Feder dem späteren Einbauzustand entsprechend zu gestalten.

Aufgabe der Erfindung ist es, die vorgenannten Probleme zu lösen und ein verfahren bereit zu stellen, mit dem es möglich ist, den verlauf der Federmittellinie einer Schraubendruckfeder einem vorgegebenen verlauf möglichst nahe zu bringen, also entweder das Entstehen von Abweichungen von der Geraden durch das Setzen weitgehend zu unterbinden, oder vorgegebene Krümmungen der Federmittellinie für gekrümmte Schraubendruckfedern zu erzeugen. Diese Bestimmbarkeit der Geometrie einer Schraubendruckfeder soll sich dabei in verfolgung einer weiteren Aufgabe der Erfindung auf warm- und kaltgewickelte Schraubendruckfedern erstrecken, wie auch das Warmsetzen und das Kaltsetzen erfassen.

Erfindungsgemäß wird daher vorgeschlagen, daß vor dem Zusammenpressen in mindestens einer ausgewählten Federwindung sich in ausgewählter Winkellage zu einem Federende diametral gegenüberliegende Windungssektoren unterschiedlicher Temperaturbereiche erzeugt werden und das Zusammenpressen durchgeführt und abgeschlossen wird, solange die gegenüberliegenden Windungssektoren noch den vorgegebenen unterschiedlichen Temperaturbereichen entsprechend unterschiedlich warm sind.

Die Erfindung löst die eingangs gestellte Aufgabe und erlaubt es, zu erwartenden Abweichungen der Federmittellinie von einer Geraden zumindest weitgehend zu kompensieren oder ermöglicht die Serienfertigung von Schraubendruckfedern mit vorgegebener, exakt positionierter Krümmung. Ein besonderer vorteil der Erfindung liegt darin, daß die konventionellen Fertigungsstufen bei der Herstellung von Schraubendruckfedern nicht verlassen werden müssen, die erfindungsgemäße Erzeugung unterschiedlicher Temperaturbereiche in einer Federwindung oder in mehreren benachbarten Federwindungen bei Bedarf lediglich eingeschaltet und nach Deckung des Bedarfs wieder abgeschaltet werden muß. Die Erzeugung der unterschiedlichen Temperaturbereiche erfolgt, wie dies in den Patentansprüchen 2 und 3 niedergelegt ist, entweder durch partielles Erwärmen oder durch partielles Kühlen. In Sonderfällen kann es auch zweckmäßig sein, einen Bereich eines insgesamt unzureichend warmen Federrohlings zu erwärmen, einen anderen Bereich desselben zu kühlen.

Patentanspruch 2 sieht also vor, daß zum Erzeugen der unterschiedlich warmen Windungssektoren die ausgewählte Federwindung oder mehrere ausgewählte benachbarte Federwindungen in einem ausgewählten der diametral gegenüberliegenden Sektoren bzw. in einer ausgewählten der diametral gegenüberliegenden Sektorengruppen partiell erwärmt werden.

Demgegenüber beschreibt Patentanspruch 3 eine Verfahrensvariante, die dadurch gekennzeichnet ist, daß zum Erzeugen der unterschiedlich warmen Windungssektoren bei einem insgesamt auf Warmsetztemperatur erwärmten Federrohling die ausgewählte Federwindung oder mehrere ausgewählte benachbarte Federwindungen in einem ausgewählten der diametral gegenüberliegenden Sektoren bzw. einer ausgewählten der gegenüberliegenden Sektorengruppen partiell gekühlt werden.

Das in Patentanspruch 4 niedergelegte Verfahren befaßt sich insbesondere mit der Herstellung einer Schraubendruckfeder, deren Federmittellinie im unbelasteten Zustand einen etwa S-förmigen Verlauf hat, wofür vorgeschlagen wird, daß eine erste Gruppe mehrerer, dem einen Federende und einander federaxial benachbarter erster Windungssektoren und eine zweite Gruppe mehrerer, dem anderen Federende und einander federaxial benachbarter zweiter Windungssektoren gleichzeitig erwärmt bzw. gleichzeitig gekühlt werden, und die von der partiellen Wärme- bzw. Kühlbehandlung betroffenen Windungssektoren der ersten Gruppe gegenüber den entsprechenden Windungssektoren der zweiten Gruppe um 180° zueinander versetzt sind.

Durch weitere Gruppenbildungen und entsprechende Änderungen der Winkelversetzung lassen sich durch die Erfindung auch räumliche S-Krümmungen und andere räumliche Krümmungen erzeugen.

Patentanspruch 5 greift das übliche Verfahren zur Herstellung von Schraubendruckfedern insgesamt auf, nämlich ein Verfahren zum Herstellen einer Schraubendruckfeder aus einem Federstahlstab, der zum Schraubenfederrohling gewickelt wird, wonach der Schraubenfederrohling in den Anlaßtemperaturbereich hinein erwärmt oder wieder erwärmt und nach dem Anlassen wieder gekühlt wird, danach die Schraubenfeder auf Warmsetztemperatur erwärmt und in Warmsetzposition gebracht wird, worauf durch axiales Zusammenpressen des Schraubenfederrohlings dessen Vorsetzen erfolgt und dadurch der Schraubendruckfeder ihre endgültige Form gegeben wird, und sieht als erfindungsgemäße Maßnahme vor, daß der insgesamt auf Warmsetztemperatur erwärmte Schraubenfederrohling unmittelbar vor dem Zusammenpressen auf in Bezug auf die radiale Lage der Federstabenden ausgewählten federaxial benachbarten Windungssektoren mehrerer benachbarter Windungen partiell gekühlt und das Zusammenpressen abgeschlossen wird, solange die den ausgewählten Windungssektoren gegenüberliegenden Windungssektoren noch im Warmsetztemperaturbereich sind.

Dieses beim Warmsetzen anzuwendende Verfahren wird gemäß Patentanspruch 6 dadurch ausgestaltet, daß der setzwarme Schraubenfederrohling zunächst bezüglich der radialen Lage der Federstabenden zu den ausgewählten Umfangssektoren vorpositioniert, so vorpositioniert in die Warmsetzposition überführt und in der Endphase der Überführung mit der partiellen Kühlung begonnen wird.

Es kann aber auch nach Patentanspruch 7 mit der partiellen Kühlung erst begonnen werden, nachdem die Schraubenfederrohling seine Warmsetzposition erreicht hat.

Beim Warmsetzen des Schraubenfederrohlings erreicht man eine weitgehend gleichmäßige bogenförmige Krümmung in der Schraubendruckfeder nach Patentanspruch 8 dadurch, daß der Schraubenfederrohling während des Zusammenpressens mit einem Windungssektor aller Windungen in ein Kühlbad eingetaucht ist.

An dieser Stelle sei darauf hingewiesen, daß die im Patentanspruch 8 niedergelegten Maßnahmen auf das Kaltsetzen übertragen werden können, indem der Federrohling in ein Heizbad, beispielsweise ein Salzbad teilweise eingetaucht wird.

Das verfahren nach Patentanspruch 9, ein verfahren zum Herstellen einer Schraubendruckfeder aus einem Federstahlstab, der zum Schraubenfederrohling gewickelt wird, wonach der Schraubenfederrohling in den Anlaßtemperaturbereich hinein erwärmt und nach dem Anlassen wieder gekühlt wird, worauf durch axiales Zusammenpressen des Schraubenfederrohlings dessen Vorsetzen erfolgt und dadurch der Schraubendruckfeder ihre endgültige Form gegeben wird, beinhaltet in den erfindungsgemäßen Maßnahmen beide Varianten zur Erzeugung einer Temperaturdifferenz und sieht vor, daß der Schraubenfederrohling unmittelbar vor dem Zusammenpressen auf in Bezug auf die radiale Lage der Federstabenden ausgewählten federaxial benachbarten Windungssektoren mehrerer benachbarter Windungen partiell erwärmt und das Zusammenpressen abgeschlossen wird, solange die ausgewählten Windungssektoren im Vergleich zu dem diametral gegenüberliegenden Bereich der Federwindungen noch wärmer sind.

Schließlich sei auf Patentanspruch 10 verwiesen, mit dem Schraubendruckfedern hoher geometrischer Präzision hergestellt werden können, indem federaxial benachbarte Umfangssektoren benachbarter Federwindungen unterschiedlich stark erwärmt bzw. gekühlt werden. Die Maßnahme nach Patentanspruch 10 ermöglicht auch die Herstellung von Schraubendruckfedern mit progressiver Krümmung, beispielsweise in Verbindung mit Patentanspruch 8 dadurch, daß die Setzvorrichtung schräg liegt und die Schraubenfeder schräg - und damit benachbarte Windungen zunehmend tiefer - in ein Kühlbad eingetaucht ist.

Die Patentansprüche 11 und 12 betreffen besondere Anwendungen, nämlich die Anwendung des Verfahrens zur Herstellung von Schraubenfedern für Radaufhängungen von Kraftfahrzeugen und Schienenfahrzeugen einerseits oder andererseits die Anwendung des Verfahrens zur Herstellung von Ventilfedern für Verbrennungsmotoren.

Insgesamt wird erkennbar, daß das Einbinden der Erfindung in eine Schraubenfedernproduktion praktisch nicht zu Lasten der Taktzeit geht, da natürlich zur Einhaltung der im Hauptanspruch niedergelegten, beim üblichen Werkstoff Stahl gut realisierbaren Verfahrensvorschriften rasch partiell gekühlt oder erwärmt werden und man dem Wärmefluß vom übrigen zum gekühlten oder erwärmten Sektorenbereich weitgehend durch ebenso zügiges Setzen zuvorkommen muß. So spielen sich die hier betroffenen Kühl- und Setzvorgänge innerhalb weniger Sekunden ab.

Das Verfahren nach Patentanspruch 7, bei dem mit der partiellen Kühlung begonnen wird, nachdem die Schraubenfeder ihre Warmsetzposition erreicht hat, wird in vorhandene Setzvorrichtungen ohne besonderen, über die Kühlung hinausgehenden Aufwand integriert werden können.

Ist die gleichmäßig gekrümmte Schraubendruckfeder die Regel, so kann natürlich an die Stelle des partiellen Eintauchens der Feder in ein stationäres Bad der Setzvorrichtung auch ein Anheben eines heb- und absenkbaren Kühlmittelbehälters treten. In anderen, von den jeweiligen betrieblichen Gegebenheiten abhängigen Fällen wird ein durch den feststehenden Teil der Stauchvorrichtung geführter Kühlmittelsprüharm die zweckmäßige vorrichtungsmäßige Lösung sein.

Die Verfahrensvariante gemäß Anspruch 6 enthält erkennbar den Hinweis, den setzwarmen Schraubendruckfederrohling beispielsweise im Schwenkarm eines Manipulators zunächst in die richtige Winkellage zu drehen, um dann den Schwenkarm in die Setzvorrichtung abzusenken und gleichzeitig ein Stück, d.h. mit axial benachbarten Ausschnitten der einzelnen Windungen in Wasser bestimmter Temperatur oder ein anderes Kühlmedium einzutauchen, wobei dann die partielle Kühlung auch noch während des Stauchens wirkt.

Es ist weitgehend unschädlich, wenn sich die partielle Kühlung über den Setzvorgang hinaus erstreckt, die dann eintretende allmähliche Vergleichmäßigung der Temperatur hat keine qualitätserheblichen Einflüsse mehr.

Zur Herstellung von gekrümmten Schraubendruckfedern beispielsweise mit einer Endabmessung von 340 mm Länge, einem Durchmesser von 132 mm und einem Drahtdurchmesser von 12,5 mm wird ein Federstahldraht bzw. Federstahlstab des Werkstoffes 55 Cr 3 nach DIN 17 221 und einer Länge von 2700 mm auf Warmformtemperatur von ca. 860 °C erwärmt und dann bei dieser Temperatur zu einer Schraubenfeder, die noch Rohling für die weitere Fertigung ist, gewunden.

Der noch warme Rohling wird dann einer Vergütungsbehandlung zur Einstellung des bei Stahl-Schraubenfedern erwünschten Gefüges (feinnadeliger Martensit) unterworfen. Dazu wird der Rohling in einem Ölbad abgeschreckt, dann auf 380 bis 420 °C angelassen, wobei die Anlaßtemperatur etwa 60 Minuten gehalten wird. Das den Anlaßofen verlassende Werkstück wird nun durch Anblasen mit Luft auf eine Temperatur abgesenkt, die 40 bis 50 °C unter der Warmsetztemperatur liegt. Schließlich wird die Schraubenfeder zum Warmsetzen wieder erwärmt, diesmal auf etwa 300 °C und der Setzvorrichtung zugeführt. In dieser wird nun die partielle Kühlung, die einen Sektor der Feder von bis 120° erfaßt, vorgenommen, wobei im Zenit des gekühlten Umfangssektors eine Temperaturabsenkung auf 120 bis 70 °C erreicht wird. Dieses partielle Kühlen und das Setzen insgesamt nehmen kaum mehr als 5 bis 6 Sekunden in Anspruch.

Im übrigen führt die Erfindung entweder zu einer Präzisionsfeder mit gerader Federmittellinie oder zu einer gezielt gekrümmten Schraubendruckfeder mit im Krümmungsbereich derselben innerhalb jeder Windung sich stetig ändernder Steigung. Die Erfindung ermöglicht es auch das Betriebsverhalten einer Ventilfeder eines Verbrennungsmotors zu optimieren.

Das erfindungsgemäße Verfahren wird anhand der beigefügten Abbildungen ergänzend erläutert. Es zeigt in schematischer Darstellung
- Fig. 1: einen setzwarmen Federrohling
- Fig. 2: einen Federrohling in einer Setzvorrichtung, teilweise in ein Kühlbad eingetaucht
- Fig. 3: einen Federrohling zum Block zusammengepreßt
- Fig. 4: eine Stirnansicht des Federrohlings in der Setzvorrichtung
- Fig. 5: eine fertige Schraubendruckfeder mit gekrümmter Federachse
- Fig. 6: einen Federrohling in einer Vorrichtung zum partiellen Erwärmen
- Fig. 7: einen partiell erwärmten Federrohling als Block in einer Setzvorrichtung
- Fig. 8: eine fertige Schraubendruckfeder mit S-förmig gekrümmter Federachse.

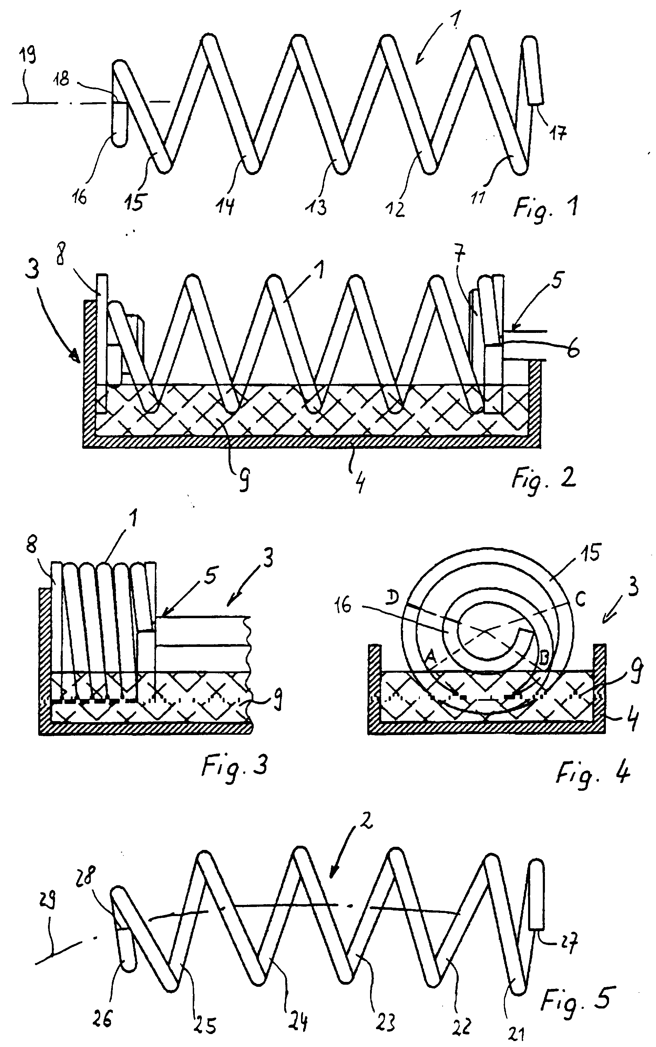

In den Abbildungen nach Fig. 1 bis Fig. 5 sind Verfahrensschritte dargestellt, die ein Federrohling 1 durchläuft, um zur fertigen Schraubendruckfeder 2 zu werden. Der hier setzwarme Federrohling 1 hat Federwindungen 11,12,13,14,15 und 16, von denen die Federwindungen 11 und 16 die Endwindungen sind und die Winkellage des Federrohlings 1 durch die Winkelposition der Federenden 17 und 18 bestimmt ist. Der Federrohling 1 hat eine gerade Federachse 19. Das in der Abbildung linke Federende ist eingezogen, die entsprechende Federwindung 16 hat letztlich einen kleineren Durchmesser als die übrigen Federwindungen 11 bis 15.

In Fig. 2 ist eine Setzvorrichtung 3 dargestellt, die zusätzlich durch einen oben offenen Behälter 4 ergänzt ist. Zur Setzvorrichtung 3 gehört ein beispielsweise hydraulisch verfahrbarer Preßkolben 5, dessen Kolbenkopf mit einem Anschlag 6 zur Fixierung der Winkellage des Federrohlings 1 mit einer Zentrierung 7 für den Federrohling 1 versehen ist. Dem Preßkolben 5 gegenüber ist ein Widerlager 8 angeordnet, das ebenfalls mit nicht näher bezeichneten Mitteln zum Zentrieren und halten eines eingesetzten Federrohlings 1 versehen ist.

Der Behälter 4 ist mit Wasser 9 gefüllt, das durch nicht dargestellte Mittel beispielsweise in einen Kühlwasserkreislauf eingebunden ist. Die Technik des Einschwenkens oder Absenkens der Setzvorrichtungsteile in den Behälter 4 oder ein Anheben des Behälters 4 in eine feststehende Setzvorrichtung 3 ist in den Abbildungen nicht näher dargestellt.

Der setzwarme Federrohling 1 nach Fig. 1 wird in die in Fig. 2 dargestellte Position gebracht, wobei jeweils die unteren Windungssektoren der Federwindungen 11 bis 15 in das kühlende Wasser eingetaucht sind und in diesem Bereich auch rasch abkühlen. Die diametral gegenüberliegenden oberen Windungssektoren bleiben warm. Nun wird die Setzvorrichtung 3 betätigt und der Federrohling zum Block zusammengepreßt, wie dies aus Fig. 3 ersichtlich ist. So wird er wenige Sekunden gehalten.

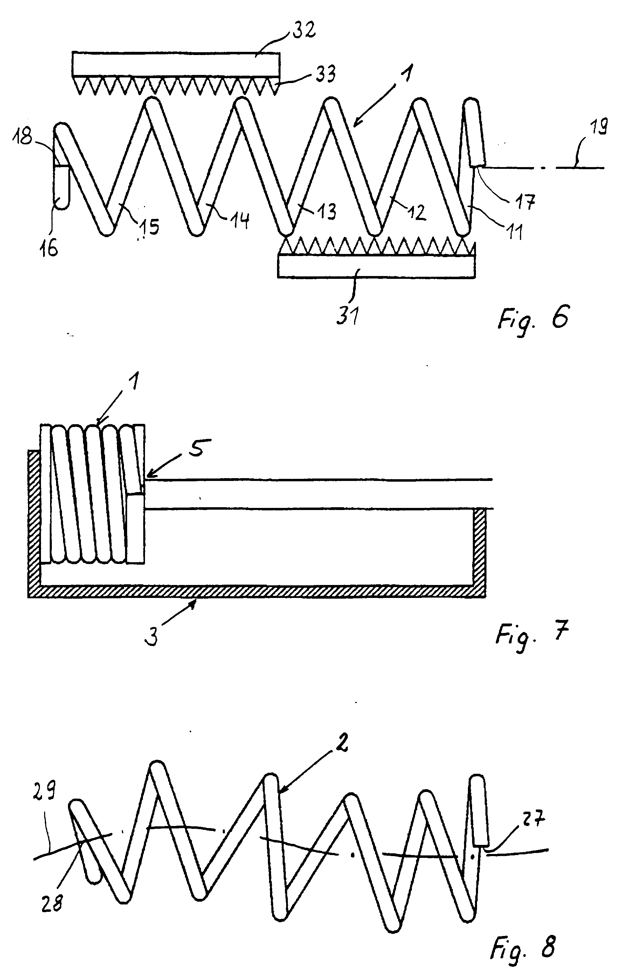

Fig. 4 zeigt nun eine Stirnansicht auf das eingezogene Ende des Federrohlings 1 in seiner Blockposition nach Fig. 3 und/oder seiner Position nach Fig. 2. Dabei wird erkennbar, daß die einzelnen in das Kühlwasser eingetauchten Federwindungen, so die Federwindung 15 in ihrem unteren von A nach B gehenden Windungssektor, der etwa 120° groß ist, direkt gekühlt wird, und es ist ersichtlich, daß diesem unteren kälteren Windungssektor ein von C nach D gehender noch wärmerer Windungssektor gegenüber liegt.

Die beschriebene partielle Kühlung des Federrohlings 1, der nach dem Zusammenpressen in der Setzvorrichtung wieder entspannt und aus der Setzvorrichtung entfernt wird, führt zu einer in Fig. 5 dargestellten fertigen Schraubendruckfeder 2, deren einzelne Federwindungen 21,22,23,24 und 25 in jeder Federwindung eine stetig wechselnde Steigung aufweisen. In vorgegebener Winkellage zu den Federenden 27 und 28 hat die Schraubendruckfeder 2 eine gekrümmte Federachse 29.

Fig. 6 zeigt nun eine andere Art der partiellen thermischen Behandlung, nämlich einen Federrohling 1, dessen dem einen Federende 17 benachbarte Federwindungen 11,12 und 13 einer unteren Heizvorrichtung 31 ausgesetzt sind, während die dem anderen Federende 18 benachbarten Federwindungen 14 und 15, bedingt auch 16 im Wirkbereich einer oberen Heizvorrichtung 32 sind. Zacken 33 sollen Brennerflammen andeuten.

Der Federrohling wird also gemäß Fig 6 rasch partiell erwärmt, dann in der Setzvorrichtung 3, dargestellt in Fig. 7, gesetzt und wird dadurch zu einer in Fig. 8 dargestellten Schraubendruckfeder 2, die eine S-förmig gekrümmte Federachse 29 aufweist, wobei das Maß und der Verlauf der Krümmung in ihrer Relation zu den Federenden 27 und 28 Vorgaben entspricht.

## Patentansprüche

1. Verfahren zum Herstellen einer Schraubendruckfeder aus einem Federrohling, der durch axiales Zusammenpressen der Federwindungen vorgesetzt und danach wieder axial entspannt wird, wobei durch das Vorsetzen, der axial etwas längere Federrohling zur demgegenüber etwas kürzeren fertigen Schraubendruckfeder wird,
dadurch gekennzeichnet,
daß vor dem Zusammenpressen in mindestens einer ausgewählten Federwindung sich in ausgewählter Winkellage zu einem Federende diametral gegenüberliegende Windungssektoren unterschiedlicher Temperaturbereiche erzeugt werden und das Zusammenpressen durchgeführt und abgeschlossen wird, solange die gegenüberliegenden Windungssektoren noch den vorgegebenen unterschiedlichen Temperaturbereichen entsprechend unterschiedlich warm sind.

2. Verfahren nach Anspruch 1,
dadurch gekennzeichnet,
daß zum Erzeugen der unterschiedlich warmen Windungssektoren die ausgewählte Federwindung oder mehrere ausgewählte benachbarte Federwindungen in einem ausgewählten der diametral gegenüberliegenden Sektoren bzw. in einer ausgewählten der diametral gegenüberliegenden Sektorengruppen partiell erwärmt werden.

3. Verfahren nach Anspruch 1,
dadurch gekennzeichnet,
daß zum Erzeugen der unterschiedlich warmen Windungssektoren bei einem insgesamt auf Warmsetztemperatur erwärmten Federrohling die ausgewählte Federwindung oder mehrere ausgewählte benachbarte Federwindungen in einem ausgewählten der diametral gegenüberliegenden Sektoren bzw. einer ausgewählten der gegenüberliegenden Sektorengruppen partiell gekühlt werden.

4. Verfahren nach Anspruch 1 und 2 bzw. nach Anspruch 1 und 3, insbesondere zum Herstellen einer Schraubendruckfeder, deren Federmittellinie im unbelasteten Zustand einen etwa S-förmigen Verlauf hat,
dadurch gekennzeichnet,
daß eine erste Gruppe mehrerer, dem einen Federende und einander federaxial benachbarter erster Windungssektoren und eine zweite Gruppe mehrerer, dem anderen Federende und einander federaxial benachbarter zweiter Windungssektoren gleichzeitig erwärmt bzw. gleichzeitig gekühlt werden, und die von der partiellen Wärme- bzw. Kühlbehandlung betroffenen Windungssektoren der ersten Gruppe gegenüber den entsprechenden Windungssektoren der zweiten Gruppe um 180° zueinander versetzt sind.

5. Verfahren zum Herstellen einer Schraubendruckfeder aus einem Federstahlstab, der zum Schraubenfederrohling gewickelt wird, wonach der Schraubenfederrohling in den Anlaßtemperaturbereich hinein erwärmt oder wieder erwärmt und nach dem Anlassen wieder gekühlt wird, danach die Schraubenfeder auf Warmsetztemperatur erwärmt und in Warmsetzposition gebracht wird, worauf durch axiales Zusammenpressen des Schraubenfederrohlings dessen Vorsetzen erfolgt und dadurch der Schraubendruckfeder ihre endgültige Form gegeben wird,
dadurch gekennzeichnet,
daß der insgesamt auf Warmsetztemperatur erwärmte Schraubenfederrohling unmittelbar vor dem Zusammenpressen auf in Bezug auf die radiale Lage der Federstabenden ausgewählten federaxial benachbarten Windungssektoren mehrerer benachbarter Windungen partiell gekühlt und das Zusammenpressen abgeschlossen wird, solange die den ausgewählten Windungssektoren gegenüberliegenden Windungssektoren noch im Warmsetztemperaturbereich sind.

6. Verfahren nach Anspruch 5,
dadurch gekennzeichnet,
daß der setzwarme Schraubenfederrohling zunächst bezüglich der radialen Lage der Federstabenden zu den ausgewählten Umfangssektoren vorpositioniert, so vorpositioniert in die Warmsetzposition überführt und in der Endphase der Überführung mit der partiellen Kühlung begonnen wird.

7. Verfahren nach Anspruch 5,
dadurch gekennzeichnet,
daß mit der partiellen Kühlung begonnen wird, nachdem die Schraubenfederrohling seine Warmsetzposition erreicht hat.

8. Verfahren nach einem der Ansprüche 5 bis 7,
dadurch gekennzeichnet,
daß der Schraubenfederrohling während des Zusammenpressens mit einem Windungssektor aller Windungen in ein Kühlbad eingetaucht ist.

9. Verfahren zum Herstellen einer Schraubendruckfeder aus einem Federstahlstab, der zum Schraubenfederrohling gewickelt wird, wonach der Schraubenfederrohling in den Anlaßtemperaturbereich hinein erwärmt und nach dem Anlassen wieder gekühlt wird, worauf durch axiales Zusammenpressen des Schraubenfederrohlings dessen Vorsetzen erfolgt und dadurch der Schraubendruckfeder ihre endgültige Form gegeben wird,
dadurch gekennzeichnet,
daß der Schraubenfederrohling unmittelbar vor dem Zusammenpressen auf in Bezug auf die radiale Lage der Federstabenden ausgewählten federaxial benachbarten Windungssektoren mehrerer benachbarter Windungen partiell erwärmt und das Zusammenpressen abgeschlossen wird, solange die ausgewählten Windungssektoren im Vergleich zu dem diametral gegenüberliegenden Bereich der Federwindungen noch wärmer sind.

10. Verfahren nach einem der Ansprüche 1 bis 9,
dadurch gekennzeichnet,
daß federaxial benachbarte Umfangssektoren benachbarter Federwindungen unterschiedlich stark gekühlt bzw. erwärmt werden.

11. Anwendung des Verfahrens nach den Ansprüchen 1 bis 10 zur Herstellung von Schraubenfedern für Radaufhängungen von Kraftfahrzeugen und Schienenfahrzeugen.

12. Anwendung des Verfahrens nach den Ansprüchen 1 bis 10 zur Herstellung von Ventilfedern für Vrebrennungsmotoren.

## Claims

1. A process for the production of a helical compression spring from a spring blank which is preset by the axial compression of spring windings and is thereafter again axially expanded, the presetting turning the axially somewhat longer spring blank to the comparatively somewhat shorter finished helical compression spring,
characterized in that
prior to the compression, at least one selected spring winding, in a selected angular position in relation to one spring end diametrically opposite winding sectors of different temperature ranges are produced, and the compression is performed and completed while the opposite winding sectors are still at different temperatures, corresponding to the given different temperature ranges.

2. A process according to claim 1,
characterized in that
to produce the winding sectors of different temperatures, the selected spring winding or a number of selected adjacent spring windings is or are partially heated in a selected one of the diametrically opposite sectors or in a selected one of the diametrically opposite groups.

3. A process according to claim 1,
characterized in that
to produce the winding sectors of different temperatures, with a spring blank heated as a whole to hot setting temperature, the selected spring winding or a number of selected adjacent spring windings is or are partially cooled in a selected one of the diametrically opposite sectors or in a selected one of the opposite sector groups.

4. A process according to claims 1 and 2 or according to claims 1 and 3, more particularly for the production of a helical compression spring whose spring centre line follows a substantially S-shaped course in the unloaded state,
characterized in that
a first group of several first winding sectors adjacent to one spring end and adjacent to one another axially of the spring, and a second group of several second winding sectors adjacent to the other spring end and adjacent to one another axially of the spring are simultaneously heated or simultaneously cooled, and the winding sectors of the first group affected by the partial heating or cooling treatment are offset by 180° to one another in relation to the corresponding winding sectors of the second group.

5. A process for the production of a helical compression spring from a spring steel rod which is wound into a helical spring blank, whereafter the helical spring blank is heated or reheated into the annealing temperature zone and is again cooled following annealing, then the helical spring is heated to hot setting temperature and moved into the hot setting position, whereafter the presetting of the helical spring blank is performed by its axial compression, whereby its final shape is conferred on the helical compression spring,
characterized in that
immediately prior to compression, the helical spring blank heated as a whole to hot setting temperature is partially cooled at winding sectors of a number of adjacent windings which are adjacent axially of the spring and selected in relation to the radial position of the spring rod ends, and compression is completed while the winding sectors opposite the selected winding sectors are still in the hot setting temperature range.

6. A process according to claim 5,
characterized in that
the setting-hot helical spring blank is first prepositioned in respect of the radial position of the spring rod ends in relation to the selected peripheral sectors and is transferred thus prepositioned into the hot setting position, the partial cooling being started in the final phase of transfer.

7. A process according to claim 5,
characterized in that
the partial cooling is started after the helical spring blank has reached its hot setting position.

8. A process according to one of claims 5 to 7,
characterized in that
during compression the helical spring blank is plunged by one winding sector of all the windings into a cooling bath.

9. A process for the production of a helical compression spring from a spring steel rod which is wound into a helical spring blank, whereafter the helical spring blank is heated into the annealing temperature range and is again cooled following annealing, whereafter the presetting of the helical spring blank is performed by its axial compression, whereby its final shape is conferred on the helical compression spring,
characterized in that
immediately prior to compression, the helical spring blank is partially heated at winding sectors of several adjacent windings adjacent axially of the spring and selected in relation to the radial position of the spring rod ends, and compression is completed while the selected winding sectors are still hotter in comparison with the diametrical opposite zone of the spring windings.

10. A process according to one of claims 1 to 9,
characterized in that
peripheral sectors of adjacent spring windings adjacent axially of the spring are cooled or heated differentially.

11. Use of the process according to claims 1 to 10 for the production of helical springs for wheel suspensions of motor vehicles and rail vehicles.

12. Use of the process according to claims 1 to 10 for the production of valve springs for internal combustion engines.

## Revendications

1. Procédé de fabrication d'un ressort de compression hélicoïdal à partir d'une ébauche de ressort qui est préconformée par compression axiale des spires puis relâchée axialement, la préconformation transformant l'ébauche de ressort, axialement légèrement plus longue, en un ressort de compression hélicoïdal fini légèrement plus court,
**caractérisé** en ce qu'avant la compression, on produit, dans au moins une spire sélectionnée du ressort, des plages de température différentes dans des secteurs de spire diamétralement opposés dans une position angulaire sélectionnée par rapport à une extrémité du ressort, et la compression est effectuée et achevée tant que les secteurs de spire opposés sont encore à des chaleurs différentes conformément aux plages de température différentes allouées.

2. Procédé selon la revendication 1, **caractérisé** en ce qu'afin de produire les secteurs de spire de chaleurs différentes, la spire de ressort sélectionnée ou plusieurs spires de ressort sélectionnées voisines sont partiellement chauffées dans un secteur sélectionné parmi les secteurs diamétralement opposés ou, selon le cas, dans un groupe sélectionné de secteurs parmi les groupes de secteurs diamétralement opposés.

3. Procédé selon la revendication 1, **caractérisé** en ce qu'afin de produire les secteurs de spire de chaleurs différentes pour une ébauche de ressort globalement chauffée à la température de préconformation à chaud, la spire de ressort sélectionnée ou plusieurs spires de ressort sélectionnées voisines sont partiellement refroidies dans un secteur sélectionné parmi les secteurs diamétralement opposés ou, selon le cas, dans un groupe sélectionné de secteurs parmi les groupes de secteurs opposés.

4. Procédé selon les revendications 1 et 2 ou, respectivement, selon les revendications 1 et 3, notamment pour la fabrication d'un ressort de compression hélicoïdal dont l'axe médian de ressort présente, à l'état non sollicité, une allure approximativement en forme de S,
**caractérisé** en ce qu'un premier groupe de plusieurs premiers secteurs de spire, voisins d'une extrémité du ressort et les uns des autres dans le sens axial du ressort, et un deuxième groupe de plusieurs deuxièmes secteurs de spire, voisins de l'autre extrémité du ressort et les uns des autres dans le sens axial du ressort, sont simultanément chauffés ou, respectivement, simultanément refroidis, et les secteurs de spire du premier groupe qui sont concernés par le traitement partiel à la chaleur ou, respectivement, au froid sont décalés de 180° par rapport aux secteurs de spire correspondants du deuxième groupe.

5. Procédé de fabrication d'un ressort de compression hélicoïdal à partir d'une barre d'acier à ressorts qui est enroulée en une ébauche de ressort hélicoïdal, l'ébauche de ressort hélicoïdal étant ensuite chauffée ou réchauffée jusque dans la plage de température de revenu, puis refroidie après le revenu, à la suite de quoi le ressort hélicoïdal est chauffé à la température de préconformation à chaud et amené dans la position de préconformation à chaud, la préconformation de l'ébauche de ressort hélicoïdal s'effectuant par compression axiale de cette ébauche, le ressort de compression hélicoïdal recevant ainsi sa forme définitive,
**caractérisé** en ce que l'ébauche de ressort hélicoïdal globalement chauffée à la température de préconformation à chaud est, juste avant la compression, partiellement refroidie sur des secteurs de spire de plusieurs spires voisines qui sont sélectionnés par rapport à la position radiale des extrémités de la barre de ressort et sont voisins dans le sens axial du ressort, et la compression est achevée tant que les secteurs de spire opposés aux secteurs de spire sélectionnés sont encore dans la plage de température de conformation à chaud.

6. Procédé selon la revendication 5, **caractérisé** en ce que l'ébauche de ressort hélicoïdal à la température de préconformation est d'abord préalablement positionnée en ce qui concerne la position radiale des extrémités de la barre de ressort par rapport aux secteurs circonférentiels choisis, est transférée ainsi préalablement positionnée dans la position de préconformation à chaud, et le refroidissement partiel est commencé dans la phase finale du transfert.

7. Procédé selon la revendication 5, **caractérisé** en ce que le refroidissement partiel est commencé une fois que l'ébauche de ressort hélicoïdal a atteint sa position de préconformation à chaud.

8. Procédé selon l'une quelconque des revendications 5 à 7, **caractérisé** en ce que l'ébauche de ressort hélicoïdal est, pendant la compression, immergée dans un bain de refroidissement par un secteur de spire de toutes les spires.

9. Procédé de fabrication d'un ressort de compression hélicoïdal à partir d'une barre d'acier à ressorts qui est enroulée en une ébauche de ressort hélicoïdal, l'ébauche de ressort hélicoïdal étant ensuite chauffée jusque dans la plage de température de revenu puis refroidie après le revenu, la préconformation de l'ébauche de ressort hélicoïdal s'effectuant par compression axiale de cette ébauche, le ressort de compression hélicoïdal recevant ainsi sa forme définitive,
**caractérisé** en ce que l'ébauche de ressort hélicoïdal est, juste avant la compression, partiellement chauffée sur des secteurs de spire de plusieurs spires voisines qui sont sélectionnés par rapport à la position radiale des extrémités de la barre de ressort et sont voisins dans le sens axial du ressort, et la compression est achevée tant que les secteurs de spire sélectionnés sont encore plus chauds que la région diamétralement opposée des spires du ressort.

10. Procédé selon l'une quelconque des revendications 1 à 9, **caractérisé** en ce que des secteurs circonférentiels de spires voisines du ressort qui sont voisins dans le sens axial du ressort sont refroidis ou, selon le cas, chauffés à des degrés différents.

11. Utilisation du procédé selon l'une quelconque des revendications 1 à 10 pour la fabrication de ressorts hélicoïdaux pour des suspensions de roues de véhicules automobiles et de véhicules ferroviaires.

12. Utilisation du procédé selon l'une quelconque des revendications 1 à 10 pour la fabrication de ressorts de soupapes pour des moteurs thermiques.
